(19) Europäisches Patentamt / European Patent Office / Office européen des brevets

(11) **EP 2 695 763 B1**

(12) **EUROPEAN PATENT SPECIFICATION**

(45) Date of publication and mention
of the grant of the patent:
**06.11.2019   Bulletin 2019/45**

(51) Int Cl.:
**B60L 9/22** *(2006.01)*     **B60L 9/28** *(2006.01)*
**B60L 9/30** *(2006.01)*     **B60L 1/10** *(2006.01)*

(21) Application number: **13176513.3**

(22) Date of filing: **15.07.2013**

(54) **Traction power converter for multisystem rail vehicle**

Traktionsstromrichter für Mehrsystem-Schienenfahrzeug

Convertisseur de puissance de traction pour véhicule ferroviaire multisystème

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2012   JP 2012177684**

(43) Date of publication of application:
**12.02.2014   Bulletin 2014/07**

(73) Proprietor: **Hitachi, Ltd.**
**Tokyo (JP)**

(72) Inventor: **Nozaki, Yuichiro**
**Chiyoda-ku,**
**Tokyo 100-8280 (JP)**

(74) Representative: **Mewburn Ellis LLP**
**City Tower**
**40 Basinghall Street**
**London EC2V 5DE (GB)**

(56) References cited:
**EP-A1- 1 288 060      DE-A1- 10 330 284**
**JP-A- 2011 130 579     US-A- 5 521 788**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a traction power converter for a multisystem rail vehicle. In particular, the present invention relates to a traction power converter that includes, as components, a power converter supporting a multisystem, an auxiliary power supply, and a power converter for a traction motor.

Background Art

Electric rail vehicles at present are provided with a traction power converter mounted thereon for allowing a power converter to convert electric power, obtained from an overhead line, into a three phase alternating current in order to control the speed of a traction motor. The rail vehicles are also provided with apparatuses such as an auxiliary power supply capable of supplying electric power in a stable manner to on-board lighting and air conditioning.

A vehicle that passes along a plurality of AC electrified sections with different voltages and/or a plurality of DC electrified sections with different voltages performs control in correspondence with a relevant overhead line voltage system so as to operate a traction inverter constituting the traction power converter and the auxiliary power supply.

There is a technique, disclosed in JP 2005-500797 W (PTL 1), for passing along feeder sections with AC, DC 3000 V, and DC 1500 V. This Patent Document discloses the technique to supply electric power to an inverter through a diode, which is a semiconductor device and constitutes a converter, in a case of a DC 3000 V catenary. In a case of a DC 1500 V catenary, this technique supplies electric power to the inverter by allowing one arm of the converter to operate as a step-up chopper so as to obtain a voltage equal to or higher than a catenary voltage.

There is another technique, disclosed in JP 2011-130579 A (PTL 2), for passing along feeder sections of DC 1500 V, DC 750 V, and DC 600 V. This Patent Document discloses the technique for passing along a section with a feeder voltage of 1500 V, which is higher than an operating voltage of an electric train at 750 V, or passing along a section with the feeder voltage of 600 V, which is lower than the operating voltage, by charging a capacitor with each feeder voltage and stepping down or stepping up the voltage with a voltage converter to 750 V.

Citation List

Patent Literatures

PTL 1: JP 2005-500797 W

PTL 2: JP 2011-130579 A
EP A 1288060 proposes a multiple voltage electrical supply for a railway vehicle.

Summary of Invention

Technical Problem

Europe exemplifies an area in which a plurality of AC and DC overhead line sections with different voltages is present. Railways in Europe operate with four types of feeder sections of AC 25 kV-50 Hz, AC 15 kV-16.7 Hz, DC 3000 V, and DC 1500 V, which poses a challenge of continuous passage along these electrified sections.

Here, there is a tradeoff relationship in which a high input voltage is desired for a traction inverter to achieve a high vehicle output, while a low input voltage is desired for an auxiliary power supply to reduce costs.

In other words, a vehicle output is reduced under a low DC catenary voltage in comparison with a high DC catenary voltage. Conversely, the auxiliary power supply may suffer increased costs to support the high DC catenary voltage because of the use of an expensive high-voltage semiconductor.

Installing apparatuses supporting the different types of electrified sections may, of course, lead to a significant reduction in effective usage rate of the apparatuses, and an increase in apparatus size and cost.

PTL 1 discloses a scheme to pass along four feeder sections. However, the scheme disclosed in PTL 1 may suffer an increase in the number of apparatuses because of a winding separately provided for an auxiliary power supply to be used for an AC electrified section. In addition, this scheme may be faced with a problem that a DC, which is stepped up with one arm of a four-quadrant converter for a DC 1500 V section, is converted again to a low voltage DC using another arm before being supplied to the auxiliary power supply, which leads to a significant reduction in efficiency due to a power converter and a chopper reactor.

The technique, disclosed in PTL 2, may be unable to meet a cost reduction demand for the auxiliary power supply and an output demand for the traction inverter, because the input voltages of the traction inverter and the auxiliary power supply are identical with each other.

It is therefore an object of the present invention, in a train that passes along at least different DC voltage sections, to provide a traction power converter that is for a multisystem rail vehicle and that prevents a reduction in output of a traction inverter during a low voltage, meets a cost reduction demand for an auxiliary power supply, and improves system efficiency.

Solution to Problem

To address the problems described above, the present invention provides a traction power converter according to claim 1.

Advantageous Effects of Invention

In a traction power converter to be installed in an electric rail vehicle that passes along a plurality of catenary voltage sections, the present invention prevents a reduction in vehicle output under a low DC catenary voltage, precludes the use of a high-voltage semiconductor in an auxiliary power supply, and achieves a reduction in apparatus size and cost.

Brief Description of Drawings

FIG. 1 is a diagram of an arrangement of power converters according to a first embodiment of the present invention.
FIG. 2 is a diagram of a circuit structure, as an arrangement of power converters according to a second embodiment of the present invention, in which a chopper reactor CHL of a step-up/down chopper is excluded and a reactor FL1 and a reactor FL2 are used instead.
FIG. 3 is a diagram of a circuit structure, as an arrangement of power converters according to a third embodiment of the present invention, in which a reactor LR, installed in a DC link 104 and constituting a filter 103 in AC feeder sections, is used as part of a DC filter reactor when passing a DC 3000 V feeder catenary section.
FIG. 4 is a diagram of a circuit structure, as an arrangement of power converters according to a fourth embodiment of the present invention, in which, an arm C2 of a semiconductor device constituting a power converter 102, which mainly converts AC to DC, is reused as a brake chopper in DC feeder catenary sections.
FIG. 5 is a diagram of a circuit structure, as an arrangement of power converters according to a fifth embodiment of the present invention, in which the step-up/down chopper provided with a DC link 104 is configured as an arm C3, which is a semiconductor device, of a power converter 102 constituting a four-quadrant converter.
FIG. 6 is a diagram of an arrangement, as an arrangement of power converters according to a sixth embodiment of the present invention, in which, in the DC feeder catenary sections, leakage inductance of a secondary winding of a traction transformer 101 is reused instead of a DC filter reactor FL1.
FIG. 7 is a diagram of an exemplary arrangement in detail of a filter 103 which is for absorbing an AC component and is connected to a DC link 104.

Description of Embodiments

In an arrangement of power converters, using a semiconductor device withstanding 6500 V, for a vehicle that supports a multiple feeder system, the present invention solves a problem of complex switchover observed with traditional examples and a problem of a reduced vehicle output in a DC electrified section under a low feeder voltage, and reduces a DC voltage of an input voltage for an auxiliary power supply.

The above-mentioned semiconductor device is referred to as an IGBT (insulated gate bipolar transistor) and has become a major component of a power converter to be installed in a traction control inverter and an auxiliary power supply. As semiconductor technology progresses, the withstand voltage of the IGBT has reached 6500 V at present, allowing one device to withstand a catenary voltage of DC 3000 V. Thus, by using this type of semiconductor device, albeit at a higher cost than a low-voltage semiconductor, an arrangement of power converters can be simplified in a vehicle supporting, not only a DC 3000 V catenary, but also a plurality of voltage systems including the DC 3000 V, which is advantageous for redundancy and efficiency of an entire apparatus.

As for the multiple feeder system, Europe is assumed in which voltage sections of a plurality of feeder systems are present per country. Examples of power conversion and other apparatuses used for each section are described hereinafter.

In the case of AC 25 kV-50 Hz, a traction transformer, a four-quadrant converter (a power converter for mainly converting single phase alternating current to DC), a traction control inverter (a power converter for converting the DC obtained by the above-mentioned converter to three phase alternating current to drive a motor), and an auxiliary power supply (which does not have to be an insulation type due to electric insulation provided by the traction transformer) are used.

In the case of AC 15 kV-16.7 Hz, a traction transformer, a four-quadrant converter (as described above), a traction control inverter (as described above), and an auxiliary power supply (which does not have to be an insulation type due to electric insulation provided by the traction transformer) are used.

In the case of DC 3000 V, an input filter, a traction control inverter (a power converter for converting DC obtained through the input filter from a catenary to three phase alternating current to drive a motor), a brake chopper (an apparatus to consume energy when a regenerating brake is disabled), and an auxiliary power supply (which should be electrically insulated from the catenary) are used.

In the case of DC 1500 V, an input filter, a traction control inverter (as described above for the DC 3000 V), a brake chopper (as described above for the DC 3000 V), and an auxiliary power supply (as described above for the DC 3000 V) are used.

It is evident that forming and switching between separate converters and circuits that support all these voltage systems leads to a significant reduction in effective usage rate of the apparatuses and an increase in apparatus size. There is a demand, therefore, for a common converter and a common circuit, both having a plurality of functions, in order to provide a vehicle with a traction using a plurality of power supply systems and thereby to improve the effective usage rate of the apparatuses.

Some embodiments of the present invention will be described herein with reference to the drawings.

[First embodiment]

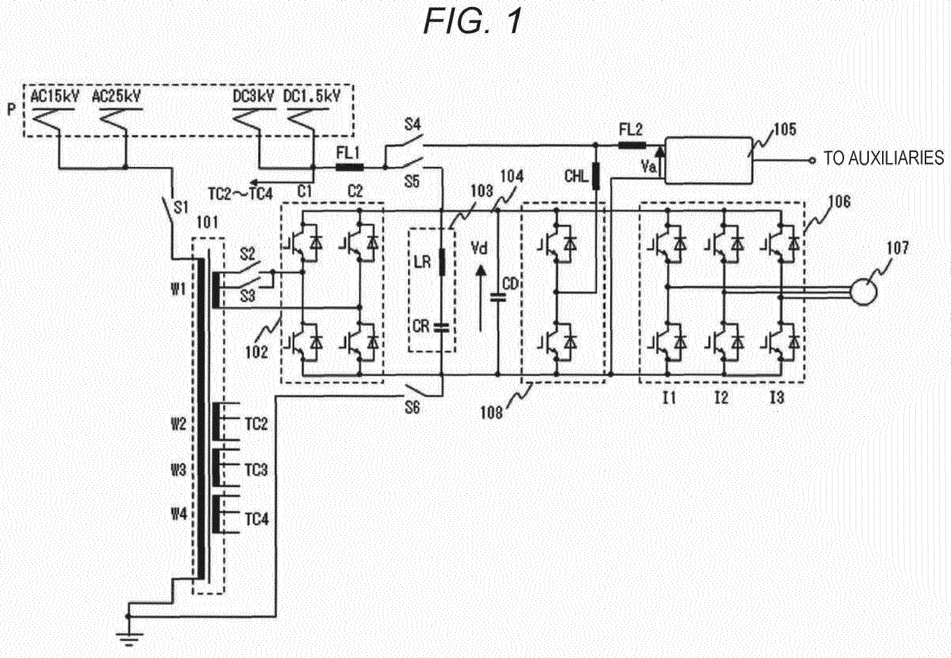

In the present embodiment, an arrangement and an operating principle of a power converter supporting a multisystem will be described. FIG. 1 is a diagram of an exemplary arrangement of power converters according to the present embodiment. A traction transformer 101 is a single phase transformer including a primary winding and a plurality of secondary windings W1 to W4. A power converter 102 is a power converter constituting a four-quadrant converter capable of conversion and inverse conversion of single phase alternating current and DC. A filter 103 is a filter circuit including a resonant filter reactor LR and a capacitor CR. A power converter 106 is a traction control inverter. An auxiliary power supply 105 is an inverter for performing constant voltage constant frequency control in order to drive auxiliaries such as on-board air conditioning and lighting. A power converter 108 is a power converter constituting a chopper apparatus, which is step-up/down means. A reference character P refers to a pantograph or a current collector. Circuit switching means S1 to S6 capable of selectively switching a current path are, for example, contactors. Reference characters C1 and C2 are each a semiconductor device arm constituting the power converter 102. Reference characters I1 to 13 each refer to a semiconductor device arm constituting the power converter 106.

Here, it is assumed that a feeder system belongs to either an AC electrified section (25 kV-50 Hz or 15 kV-16.7 Hz), or a DC electrified section (3 kV or 1.5 kV).

Note that, in FIG. 1, the traction transformer 101 is provided with the same number of secondary windings W1 to W4 as a traction power converter. In some cases, the traction transformer 101 may be provided with a third winding to be used for heating, etc. FIG. 1 is a diagram related to one traction power converter. A group of traction power converters including traction power converters TC2 to TC4 having a similar arrangement is not illustrated in this diagram. In addition, this is not intended to limit the number of secondary windings for one primary winding, the number of four-quadrant converters to be connected thereto, or the number of traction power converters in the present invention. In other words, a connection to a DC link 104 may be from a plurality of secondary windings through a plurality of power converters 102. Also, a plurality of power converters 106 may be connected to the DC link 104 for connecting a plurality of traction motors 107.

The description above is also applied to second to sixth embodiments described herein.

An arrangement and an operation of a circuit for passing along each of the feeder system sections described above will now be described.

For AC 25 kV-50 Hz, among the circuit switching means S1 to S6 illustrated in FIG. 1, S1 and S3 are switched on. This allows AC current to be supplied from a catenary through the pantograph or current collector P to the traction transformer 101. The power converter 102, constituting the four-quadrant converter, is connected to a secondary side of the traction transformer 101 to convert single phase alternating current, obtained from the secondary side of the traction transformer 101, to DC for output to the DC link 104. Rectification ripple as an AC component at 100 Hz, which is twice as high as a feeder frequency, is imposed at the DC link 104 due to a rectifying effect of the power converter 102. This AC component is absorbed by the filter 103 connected to the DC link 104 to obtain stable DC. The filter 103 may exclude a reactor or it may combine components such as a reactor, a capacitor, and a resistor. This embodiment is described with an assumption that the reactor LR and the capacitor CR constitute the filter.

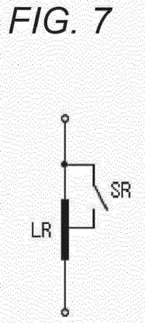

In a strict sense, the reactor LR, constituting the filter 103, includes switching means SR capable of changing an inductance value, as illustrated in FIG. 7. This determines inductance such that a resonant frequency, represented by Formula 1 below, is 100 Hz for the 25 kV-50 Hz feeder section.

[Formula 1]

$$ f_r = \frac{1}{2\pi\sqrt{CRLR}} $$

The power converter 106, which is the traction control inverter, and the power converter 108, which is the step-up/down chopper, are connected to the DC link 104. In addition, the DC link 104 is provided with a capacitor CD to absorb switching ripple, which is imposed at the DC link 104 due to power conversion by a switching operation of semiconductor devices in the power converter 102, the power converter 106, and the power converter 108.

The power converter 106 controls DC power obtained from the DC link 104 such that the traction motor 107 provides a desired output, and thereby controls traction for vehicle propulsion.

The power converter 108, which performs step-up/down chopper operations, is connected through a reactor CHL and a reactor FL2 to the auxiliary power supply 105. The power converter 108 uses the reactor CHL and the reactor FL2 to convert voltage Vd, which is an input from the DC link 104, to an output of voltage Va, (where voltage Vd > voltage Va). Here, voltage Va is 1500 V, which is the lower feeder voltage of the DC feeder systems that a vehicle can pass along. The auxiliary power supply 105 drives the auxiliaries using DC voltage Va, obtained by the power converter 108, as an input.

For AC 15 kV-16.7 Hz, among the circuit switching means S1 to S6 illustrated in FIG. 1, S1 and S2 are switched on. In addition, the switching means SR, which is for changing the inductance value of the reactor LR constituting the filter 103 connected to the DC link 104, is open, so that the resonant frequency, determined by the reactor LR and the capacitor CR in Formula 1, is changed to 33Hz, which is twice as high as the feeder frequency. Other circuit operations are similar to the case of 25 kV-50 Hz described above.

For DC 3000 V, among the circuit switching means S1 to S6 illustrated in FIG. 1, S5 and S6 are switched on. This allows DC power to be supplied from the pantograph or current collector P through a reactor FL1 to the DC link 104. The power converter 106, which is the traction control inverter, and the power converter 108, which is the step-up/down chopper, are connected to the DC link 104. In addition, the DC link 104 is provided with the capacitor CD to absorb the switching ripple, which is imposed at the DC link 104 due to the power conversion by the switching operation of the semiconductor devices in the power converter 106 and the power converter 108. Here, the filter 103 may be disconnected from or left connected to the DC link 104.

From this point on, similarly to the AC 25 kV-50 Hz section, the power converter 106 controls the DC power obtained from the DC link 104 such that the traction motor 107 provides a desired output, and thereby controls the traction for the vehicle propulsion.

The power converter 108, which performs the step-up/down chopper operations, is connected through the reactor CHL and the reactor FL2 to the auxiliary power supply 105. The power converter 108 uses the reactor CHL and the reactor FL2 to step-down convert an input, which is voltage Vd of the DC link 104, to an output of voltage Va, (where voltage Vd > voltage Va). Here, voltage Va is 1500 V, which is the lower feeder voltage of the DC feeder systems that a vehicle can pass along.

The auxiliary power supply 105 drives the auxiliaries using DC voltage Va, obtained by the power converter 108, as an input.

For DC 1500 V, among the circuit switching means S1 to S6 illustrated in FIG. 1, S4 and S6 are switched on. This allows the pantograph or current collector P and the power converter 108, which performs the step-up/down chopper operations, to be connected through the reactor FL1 and the reactor CHL to supply DC power to the DC link 104. The power converter 108 uses the reactor FL1 and the reactor CHL to step-up convert an input, which is a catenary voltage of DC 1500 V, to an output of voltage Vd, (where voltage Vd > 1500 V).

Voltage Vd of the DC link 104 may be set to a voltage corresponding to the DC 3000 V feeder, which allows improvement of the conversion efficiency of the power converter 106, which is the traction control inverter.

Furthermore, the power converter 106, which is the traction control inverter, and the power converter 108, which is the step-up/down chopper, are connected to the DC link 104. In addition, the DC link 104 is provided with the capacitor CD to absorb the switching ripple, which is imposed at the DC link 104 due to the power conversion by the switching operation of the semiconductor devices in the power converter 106 and the power converter 108. Here, the filter 103 may be disconnected from or left connected to the DC link 104.

The power converter 106 controls the DC power obtained from the DC link 104 such that the traction motor 107 provides a desired output, and thereby controls the traction for the vehicle propulsion. The auxiliary power supply 105 directly receives the catenary voltage in the DC 1500 V feeder section from the pantograph or current collector P through the reactor FL1 and the reactor FL2 in order to drive the auxiliaries.

As described above, the arrangement according to the present embodiment allows 3000 V to be input into the power converter 106 without voltage step-up/down and 1500 V to be input into the auxiliary power supply 105 after the step-down by the power converter 108 in the case where DC 3000 V is supplied from the feeder. In the case where DC 1500 V is supplied from the feeder, the arrangement according to the present embodiment allows 3000 V to be input into the power converter 106 after the step-up by the power converter 108 and 1500 V to be input into the auxiliary power supply 105 without the voltage step-up/down. Switching a path to the power converter 108 in accordance with the power supply from the feeder can prevent a reduction in efficiency due to reasons such as a power converter, increase an input voltage for the power converter 106, which faces a desire to provide a high output, and maintain a low input voltage for the auxiliary power supply 105, which faces an increased demand for a cost reduction.

The present embodiment and following embodiments herein describe the cases where the feeder DC voltage is 1500 V and 3000 V. It is essentially possible to achieve the effect of the present embodiment in other DC electrified sections by letting an auxiliary power supply use a low voltage section as an input voltage and letting a traction inverter use a high voltage section as an input voltage. Furthermore, the present invention can be applied to a case where different voltages are applied. The present invention is applicable when an applied voltage is switched in a manner depending on a time frame, etc. within an identical feeder section. The present invention is, of course, not limited to a catenary. It is evident that the present invention can be also applied to an overhead line in general. The effect of the present invention can be achieved by not only the first embodiment, but also any of the second to sixth embodiments to be described hereinafter.

[Second embodiment]

In the present embodiment, an example will be described, in which the reactor CHL of the first embodiment can be excluded.

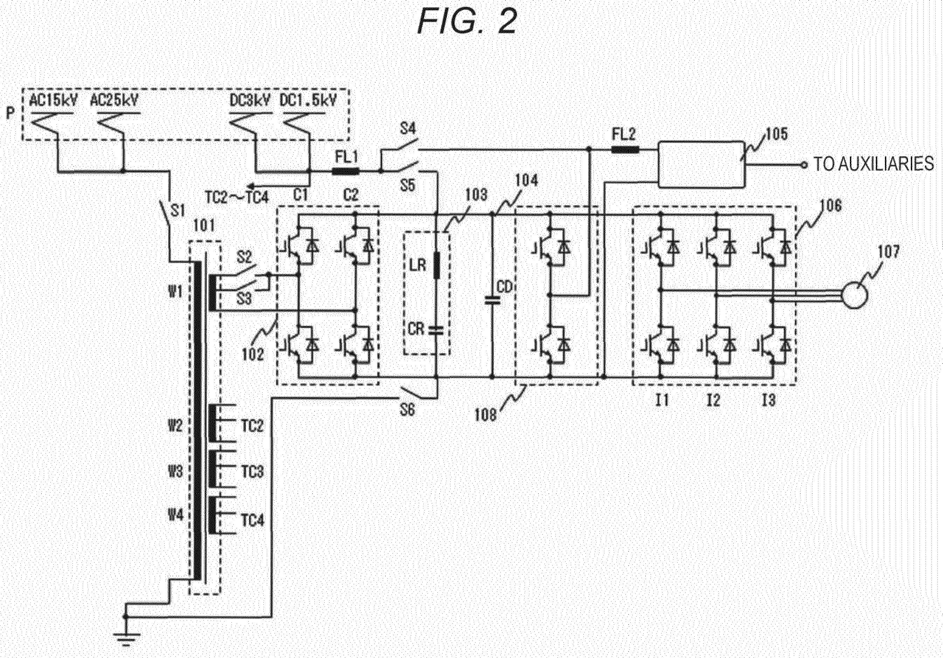

FIG. 2 is a diagram of an arrangement of power converters according to a second embodiment. In the second embodiment, a power converter 108 is connected to a DC link 104 and performs step-up/down chopper operations. In a feeder section of AC 25 kV-50 Hz or 15 kV-16.7 Hz, or DC 3000 V, the power converter 108 uses a reactor FL2 to perform the step-down operation, whereas in the DC 1500 V feeder section, the power converter 108 uses a reactor FL1 to perform the step-up operation. The exclusion of the reactor CHL can further simplify an apparatus in comparison with the first embodiment.

In other respects, the arrangement of power converters and the method of switching circuits are similar to the first embodiment.

[Third embodiment]

In the present embodiment, an example will be described, in which a load can be reduced for the reactor FL1 of the first embodiment.

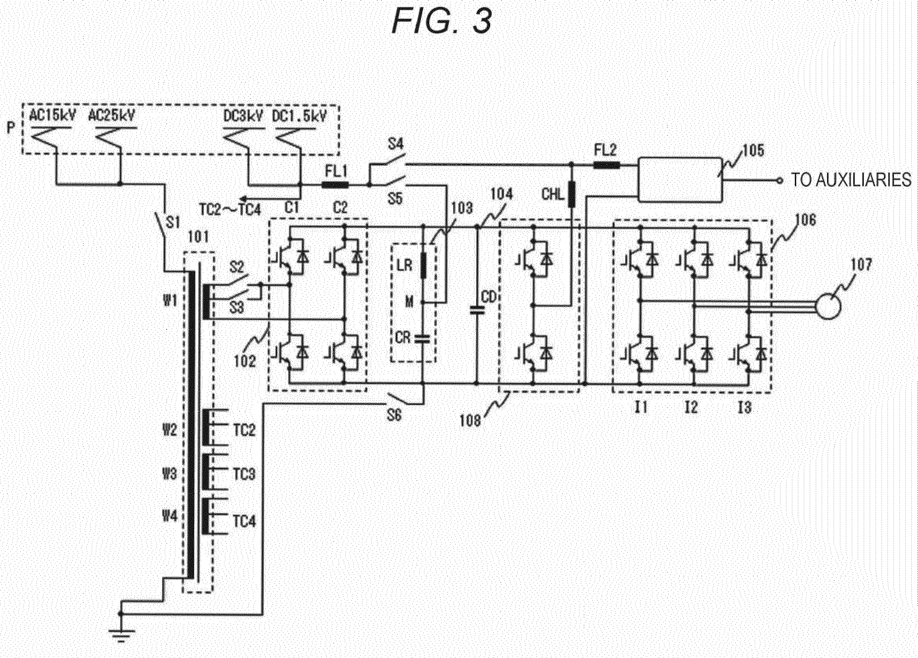

FIG. 3 is a diagram of an arrangement of power converters according to a third embodiment. A midpoint M is provided at a connecting point of a reactor LR and a capacitor CR, which constitute a filter 103 connected to a DC link 104. The midpoint M is connected to a pantograph or current collector P through a reactor FL1 and circuit switching means S5.

To pass along the feeder section of DC 3000 V, circuit switching means S5 and S6 are switched on. This allows DC power to be supplied from the pantograph or current collector P through the reactor FL1 and the reactor LR to the DC link 104, which enables a smaller inductance value to be set for the reactor FL1 and can thereby achieve a further reduction in apparatus size. Operations after the power is supplied to the DC link 104 and operations for the AC feeder sections and the DC 1500 V feeder section are similar to the first embodiment.

[Fourth embodiment]

In the present embodiment, an example will be described, in which the power converter 102 of the first embodiment can be reused as a brake chopper.

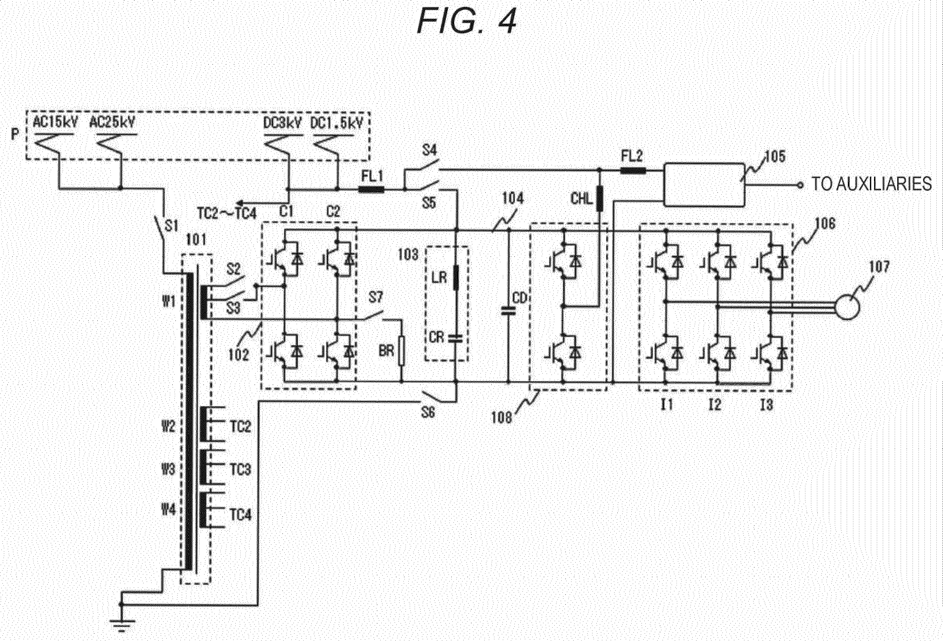

FIG. 4 is a diagram of an arrangement of power converters according to a fourth embodiment. In the AC feeder sections, in general, a regenerating brake is possible in which energy generated by a brake operation of a vehicle is returned to a catenary. However, in the DC 3000 V and 1500 V feeder sections, the regenerating brake may be difficult in some cases.

Circuit switching means S7 and a resistor BR, provided at a connecting point between a traction transformer 101 and an arm of a power converter 102 constituting a four-quadrant converter, are connected to a negative side of a DC link 104. In the DC 3000 V and 1500 V feeder sections, turning on the circuit switching means S7 allows C2, which is an arm of the power converter 102, to be reused as a brake chopper. Then, energy generated by a brake can be consumed by the resistor BR. Other operations are similar to the first embodiment.

[Fifth embodiment]

In the present embodiment, an example will be described, in which commonality of converters according to the first embodiment is achieved to further simplify implementation.

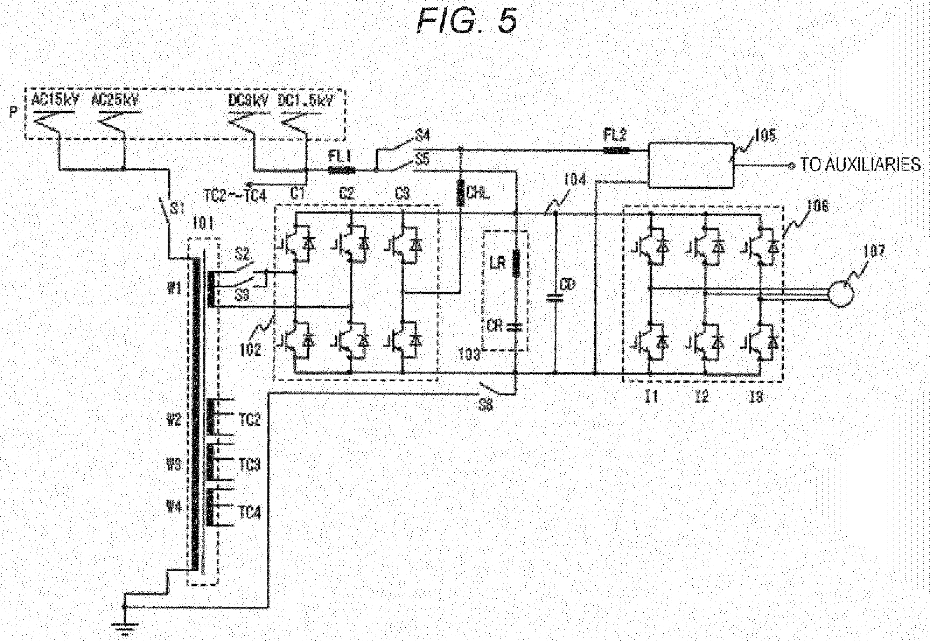

FIG. 5 is a diagram of an arrangement of power converters according to a fifth embodiment. The power converter 108, which is the step-up/down chopper and is connected to the DC link 104, is configured and used as a third arm C3 of a power converter 102 constituting a four-quadrant converter. In this manner, the power converter 102 is of an arrangement of a power converter including three arms, which is similar to a power converter 106 constituting a traction control inverter. This can achieve the commonality of the converters. In other words, this precludes the use of separate power converters of different arrangements such as the power converter 102 and the power converter 106 in the first embodiment, which facilitates the implementation.

[Sixth embodiment]

In the present embodiment, an example will be described, in which the reactor FL1 of the first embodiment can be excluded.

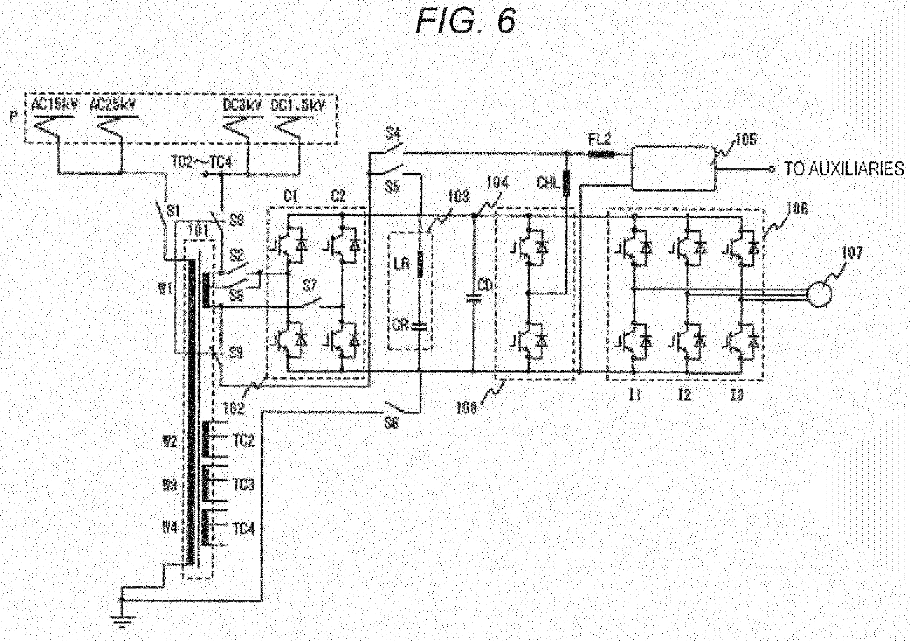

FIG. 6 is a diagram of an arrangement of power converters according to a sixth embodiment. A circuit structure is formed in which, instead of the reactor FL1 used for the DC feeder sections, leakage inductance of a secondary winding W1 of a traction transformer 101 is used. Specifically, in this arrangement, a pantograph or current collector P, which is to be used in the DC feeder sections, and one terminal of a secondary winding W1 of the traction transformer 101 are connected through circuit switching means S8. In addition, the other terminal of the secondary winding W1 and circuit switching means S4 and S5 are connected through circuit switching means S9. A circuit structure and an operation for passing along a section of each feeder system are described hereinafter.

An identical operation to the first embodiment is performed in the AC feeder sections.

For DC 3000 V, among circuit switching means S1 to S9 illustrated in FIG. 6, circuit switching means S5 and S6, and S8 and S9 are switched on. This allows DC power to be supplied from the pantograph or current collector P to the DC link 104 through the leakage inductance of the secondary winding of the traction transformer 101, instead of inductance of the reactor FL1. A power converter 106, which is a traction control inverter, and a power converter 108, which is a step-up/down chopper, are connected to the DC link 104. In addition, the DC link 104 is provided with a capacitor CD to absorb switching ripple, which is imposed at the DC link 104 due to a power conversion by a switching operation of semiconductor devices in the power converter 106 and the power converter 108. Here, a filter 103 may be disconnected from or left connected to the DC link 104.

From this point on, similarly to the first embodiment, the power converter 106 controls the DC power obtained from the DC link 104 such that a traction motor 107 provides a desired output, and thereby controls traction for vehicle propulsion.

Also similarly to the first embodiment, the power converter 108, which performs the step-up/down chopper operations, is connected through a reactor CHL and a reactor FL2 to an auxiliary power supply 105. The power converter 108 uses the reactor CHL and the reactor FL2 to step-down convert an input, which is voltage Vd of the DC link 104, to an output of voltage Va, (where voltage Vd > voltage Va). Here, voltage Va is 1500 V, which is the lower feeder voltage of the DC feeder systems that a vehicle can pass along. The auxiliary power supply 105 drives auxiliaries using DC voltage Va, obtained by the power converter 108, as an input.

For DC 1500 V, among circuit switching means S1 to S9 illustrated in FIG. 6, the circuit switching means S4 and S6, and S8 and S9 are switched on. This allows the pantograph or current collector P and the power converter 108, which performs the step-up/down chopper operations, to be connected through the reactor CHL and the leakage inductance of the secondary winding of the traction transformer 101, instead of the inductance of the reactor FL1, to supply the DC power to the DC link 104. The power converter 108 uses the reactor FL2 and the reactor CHL to step-up convert an input, which is a catenary voltage of DC 1500 V, to an output of voltage Vd, (where voltage Vd > 1500 V).

Voltage Vd of the DC link 104 may be set to a voltage corresponding to the DC 3000 V feeder, which allows improvement of the conversion efficiency of the power converter 106, which is the traction control inverter.

Furthermore, the power converter 106, which is the traction control inverter, and the power converter 108, which is the step-up/down chopper, are connected to the DC link 104. In addition, the DC link 104 is provided with the capacitor CD to absorb the switching ripple, which is imposed at the DC link 104 due to the power conversion by the switching operation of the semiconductor devices in the power converter 106 and the power converter 108. Here, the filter 103 may be disconnected from or left connected to the DC link 104.

The power converter 106 controls the DC power obtained from the DC link 104 such that the traction motor 107 provides a desired output, and thereby controls the traction for vehicle propulsion. The auxiliary power supply 105 directly receives the catenary voltage in the DC 1500 V feeder section from the pantograph or current collector P through the reactor FL2 and the leakage inductance of the secondary winding of the traction transformer 101, instead of the inductance of the reactor FL1, in order to drive the auxiliaries.

In a manner described above, reusing the secondary winding W1 instead of the reactor FL1 in the first embodiment can achieve apparatus simplification.

Reference Signs List

| 101: | Traction transformer |
| 102, 106, 108: | Power converter |
| 103: | Filter |
| 104: | DC link |
| 105: | Auxiliary power supply |
| 107: | Traction motor |
| BR: | Resistor |
| C1, C2, C3, I1, 12, 13: | Arm |
| CD, | CR: Capacitor |
| CHL, FL1, FL2, LR: | Reactor |
| P: | Pantograph or current collector |
| S1 to S9, SR: | Switching means |
| TC2, TC3, TC4: | Traction power converter |
| Va, Vd: | Voltage |
| W1, W2, W3, W4: | Secondary winding |

## Claims

1. A traction power converter for a multisystem rail vehicle, the traction power converter comprising:

   a current collector (P) capable of collecting current from two different DC feeder system sections, one having a higher DC voltage than the other;
   an inverter (106) configured to drive an AC motor (107);
   an inverter (105) configured to perform constant voltage constant frequency control, wherein said inverter uses a semiconductor device with a withstand voltage lower than that of the inverter configured to drive the AC motor;
   a step-up/down chopper (108) capable of outputting a step-up/down DC voltage from an input DC; and
   first circuit switching means (S4-S6) capable of switching a current path selectively,
   wherein the first circuit switching means is configured to switch the current path such that,
   in a case in which the current collector collects DC from a DC feeder system section under the higher DC voltage, said DC voltage is stepped down by the step-up/down chopper and supplied to the inverter configured to perform the constant voltage constant frequency control,
   in a case in which the current collector collects DC from a DC feeder system section under the lower DC voltage, said DC voltage is stepped up by the step-up/down chopper and supplied to the inverter configured to drive the AC motor, and
   in the case in which the current collector collects the higher voltage DC of the two DCs, the higher voltage DC is supplied to the inverter configured to drive the AC motor,
   **characterized in that** in the case in which the current collector collects the lower voltage DC of the two DCs, the lower voltage DC is directly supplied to the inverter configured to perform the constant voltage constant frequency control.

2. The traction power converter for a multisystem rail vehicle according to claim 1, further comprising:

a transformer (101) capable of outputting a transformed AC voltage from an input AC;
a converter (102) configured to convert the AC transformed by the transformer to a DC; and
second circuit switching means (S1-S3) capable of switching the current path selectively,
wherein the current collector is also capable of collecting current from an AC feeder system section, and
the second circuit switching means is configured to switch the current path such that,
in a case in which the current collector collects the AC, the AC flows from the current collector to the transformer,
power converted to the DC by the converter is supplied to the inverter configured to drive the AC motor, and
power converted to the DC by the converter and stepped-down by the step-up/down chopper is supplied to the
inverter configured to perform the constant voltage constant frequency control.

3. The traction power converter for a multisystem rail vehicle according to claim 2, further comprising:

third circuit switching means (S7) capable of switching the current path selectively; and
a resistor (BR) connected in series to the third circuit switching means,
wherein the third circuit switching means is configured to switch the current path such that,
in a case in which the current collector collects a DC, the resistor is connected to the converter, and an arm
constituting the converter performs step-down control.

4. The traction power converter for a multisystem rail vehicle according to claim 2,
wherein the number of arms constituting the inverter configured to control the AC motor is identical to the number
of arms constituting the converter.

5. The traction power converter for a multisystem rail vehicle according to claim 2, further comprising fourth circuit
switching means (S8, S9) between the current collector and the first circuit switching means, the fourth circuit
switching means being capable of switching the current path selectively,
wherein the fourth circuit switching means is configured to switch the current path such that,
in a case in which the current collector collects a DC, the current flows through the transformer to the first circuit
switching means.

6. The traction power converter for a multisystem rail vehicle according to claim 2, further comprising a filter circuit
(103) connected between the converter and the step-up/down chopper, the filter circuit comprising a capacitor.

7. The traction power converter for a multisystem rail vehicle according to any of claims 2 to 6, further comprising fifth
circuit switching means (S1, S3),
wherein the current collector (P) is also capable of collecting current from two different AC feeder system sections,
the current from the two AC feeder system sections having different voltages, and
the fifth circuit switching means is capable of switching a winding ratio of the transformer in a manner dependent
on the voltages of the two ACs.

8. The traction power converter for a multisystem rail vehicle according to claim 7,
wherein the two DCs are DC 3000 V and DC 1500 V, and
the two ACs are AC 25 kV-50 Hz and AC 15 kV-16.7 Hz.

**Patentansprüche**

1. Traktionsleistungswandler für ein Mehrsystem-Schienenfahrzeug, wobei der Traktionsleistungswandler Folgendes
umfasst:

einen Stromabnehmer (P), der für ein Aufnehmen von Strom aus zwei unterschiedlichen Gleichstromzuleitungssystemabschnitten geeignet ist, wobei einer eine höhere Gleichstromspannung als die andere aufweist;
einen Wechselrichter (106), der zum Antreiben eines Wechselstrommotors (107) konfiguriert ist;
einen Wechselrichter (105), der zum Ausführen einer Konstantspannung-Konstantfrequenz-Steuerung konfiguriert ist, wobei der Wechselrichter eine Halbleitervorrichtung mit einer Spannungsfestigkeit verwendet, die
niedriger als diejenige des zum Antreiben des Wechselstrommotors konfigurierten Wechselrichters ist;
einen Hoch-/Tiefsetz-Steller (108), der zum Ausgeben einer Hoch-/Tiefsetz-Gleichspannung aus einem eingegebenen Gleichstrom geeignet ist; und
ein erstes Schaltungsumschaltmittel (S4-S6), das zum selektiven Umschalten eines Strompfads geeignet ist, wobei das erste Schaltungsumschaltmittel konfiguriert ist, den Strompfad derart umzuschalten, dass in einem Fall, in dem der Stromabnehmer Gleichstrom aus einem Gleichstromzuleitungssystemabschnitt mit der höheren Gleichspannung aufnimmt, die Gleichstromspannung durch den Hoch-/Tiefsetz-Steller tiefgesetzt und dem Wechselrichter zugeführt wird, der konfiguriert ist, die Konstantspannung-Konstantfrequenz-Steuerung auszuführen,

dass in einem Fall, in dem der Stromabnehmer Gleichstrom aus einem Gleichstromzuleitungssystemabschnitt mit der niedrigeren Gleichstromspannung aufnimmt, die Gleichspannung durch den Hoch-/Tiefsetz-Steller hochgesetzt und dem zum Antreiben des Wechselstrommotors konfigurierten Wechselrichter zugeführt wird, und

dass in dem Fall, in dem der Stromabnehmer den Gleichstrom höherer Spannung der zwei Gleichströme aufnimmt, der Gleichstrom höherer Spannung dem zum Antreiben des Wechselstrommotors konfigurierten Wechselrichter zugeführt wird,

**dadurch gekennzeichnet, dass** in dem Fall, in dem der Stromabnehmer den Gleichstrom niedrigerer Spannung der zwei Gleichströme aufnimmt, der Gleichstrom niedrigerer Spannung direkt dem zum Ausführen der Konstantspannung-Konstantfrequenz-Steuerung konfigurierten Wechselrichter zugeführt wird.

2. Traktionsleistungswandler für ein Mehrsystem-Schienenfahrzeug gemäß Anspruch 1, ferner umfassend:

einen Transformator (101), der zum Ausgeben einer transformierten Wechselspannung aus einem eingegebenen Wechselstrom geeignet ist;
einen Wandler (102), der zum Umwandeln des durch den Transformator transformierten Wechselstroms in einen Gleichstrom konfiguriert ist; und
ein zweites Schaltungsumschaltmittel (S1-S3), das zum selektiven Umschalten des Strompfads geeignet ist, wobei der Stromabnehmer ebenfalls zum Aufnehmen von Strom aus einem Wechselstromzuleitungssystemabschnitt geeignet ist, und
wobei das zweite Schaltungsumschaltmittel konfiguriert ist, den Strompfad derart umzuschalten, dass in einem Fall, in dem der Stromabnehmer den Wechselstrom aufnimmt, der Wechselstrom vom Stromabnehmer zum Transformator fließt,
dass durch den Wandler in den Gleichstrom umgewandelte Leistung dem zum Antreiben des Wechselstrommotors konfigurierten Wechselrichter zugeführt wird, und
dass Leistung, die durch den Wandler in den Gleichstrom umgewandelt und durch den Hoch-/Tiefsetz-Steller tiefgesetzt wird, dem zum Ausführen der Konstantspannung-Konstantfrequenz-Steuerung konfigurierten Wechselrichter zugeführt wird.

3. Traktionsleistungswandler für ein Mehrsystem-Schienenfahrzeug gemäß Anspruch 2, ferner umfassend:

ein drittes Schaltungsumschaltmittel (S7), das zum selektiven Umschalten des Strompfads geeignet ist; und
einen Widerstand (BR), der mit dem dritten Schaltungsumschaltmittel in Serie geschaltet ist,
wobei das dritte Schaltungsumschaltmittel konfiguriert ist, den Strompfad derart umzuschalten,
dass in einem Fall, in dem der Stromabnehmer einen Gleichstrom aufnimmt, der Widerstand mit dem Wandler verbunden ist, und ein den Wandler bildender Zweig eine Tiefsetzsteuerung ausführt.

4. Traktionsleistungswandler für ein Mehrsystem-Schienenfahrzeug gemäß Anspruch 2,
wobei die Anzahl von Zweigen, die den zum Steuern des Wechselstroms konfigurierten Wechselrichter bilden, mit der Anzahl von Zweigen, die den Wandler bilden, identisch ist.

5. Traktionsleistungswandler für ein Mehrsystem-Schienenfahrzeug gemäß Anspruch 2, ferner umfassend ein viertes Schaltungsumschaltmittel (S8, S9) zwischen dem Stromabnehmer und dem ersten Schaltungsumschaltmittel, wobei das vierte Schaltungsumschaltmittel zum selektiven Umschalten des Strompfads geeignet ist,
wobei das vierte Schaltungsumschaltmittel konfiguriert ist, den Strompfad derart umzuschalten,
dass in einem Fall, in dem der Stromabnehmer einen Gleichstrom aufnimmt, der Strom durch den Transformator zum ersten Schaltungsumschaltmittel fließt.

6. Traktionsleistungswandler für ein Mehrsystem-Schienenfahrzeug gemäß Anspruch 2, ferner umfassend eine Filterschaltung (103), die zwischen dem Wandler und dem Hoch-/Tiefsetz-Steller geschaltet ist, wobei die Filterschaltung einen Kondensator umfasst.

**7.** Traktionsleistungswandler für ein Mehrsystem-Schienenfahrzeug gemäß einem der Ansprüche 2 bis 6, ferner umfassend ein fünftes Schaltungsumschaltmittel (S1, S3),
wobei der Stromabnehmer (P) ebenfalls zum Aufnehmen von Strom aus zwei unterschiedlichen Wechselstromzuleitungssystemabschnitten geeignet ist, wobei der Strom aus den zwei Wechselstromzuleitungssystemabschnitten unterschiedliche Spannungen aufweist, und
wobei das fünfte Schaltungsumschaltmittel zum Umschalten eines Wicklungsverhältnisses des Transformators in einer von den Spannungen der zwei Wechselströme abhängigen Art und Weise geeignet ist.

**8.** Traktionsleistungswandler für ein Mehrsystem-Schienenfahrzeug gemäß Anspruch 7,
wobei die zwei Gleichströme ein 3000 V -Gleichstrom und ein 1500 V -Gleichstrom sind, und
wobei die zwei Wechselströme ein 25 kV-50 Hz -Wechselstrom und ein 15 kV-16,7 Hz -Wechselstrom sind.

**Revendications**

**1.** Convertisseur de puissance de traction pour un véhicule ferroviaire multisystème, le convertisseur de puissance de traction comprenant :

un collecteur de courant (P) capable de collecter le courant provenant de deux sections de système d'alimentation en courant continu différentes, l'une ayant une tension continue plus élevée que l'autre ;
un onduleur (106) configuré pour commander un moteur à courant alternatif (107) ;
un onduleur (105) configuré pour effectuer une commande à fréquence constante et tension constante, dans lequel ledit onduleur utilise un dispositif à semiconducteurs avec une tension de tenue inférieure à celle de l'onduleur configuré pour commander le moteur à courant alternatif ;
un hacheur élévateur/abaisseur (108) capable de sortir une tension continue élevée/abaissée à partir d'une tension continue d'entrée ; et
des premiers moyens de commutation de circuit (S4 à S6) capables de commuter un trajet de courant de manière sélective,
dans lequel les premiers moyens de commutation de circuit sont configurés pour commuter le trajet de courant de sorte que,
dans un cas dans lequel le collecteur de courant collecte le courant continu provenant d'une section de système d'alimentation en courant continu sous la tension continue plus élevée, ladite tension continue soit abaissée par le hacheur élévateur/abaisseur et fournie à l'onduleur configuré pour effectuer la commande à fréquence constante et tension constante,
dans un cas dans lequel le collecteur de courant collecte le courant continu provenant d'une section de système d'alimentation en courant continu sous la tension continue plus faible, ladite tension continue soit élevée par le hacheur élévateur/abaisseur et fournie à l'onduleur configuré pour commander le moteur à courant alternatif, et
dans le cas dans lequel le collecteur de courant collecte le courant continu sous une tension plus élevée des deux courants continus, le courant continu sous une tension plus élevée soit fourni à l'onduleur configuré pour commander le moteur à courant alternatif,
**caractérisé en ce que**, dans le cas dans lequel le collecteur de courant collecte le courant continu sous une tension plus faible des deux courants continus, le courant continu sous une tension plus faible est directement fourni à l'onduleur configuré pour effectuer la commande à fréquence constante et tension constante.

**2.** Convertisseur de puissance de traction pour un véhicule ferroviaire multisystème selon la revendication 1, comprenant en outre :

un transformateur (101) capable de sortir une tension alternative transformée à partir d'un courant alternatif d'entrée ;
un convertisseur (102) configuré pour convertir le courant alternatif transformé par le transformateur en un courant continu ; et
des deuxièmes moyens de commutation de circuit (S1 à S3) capables de commuter le trajet de courant de manière sélective,
dans lequel le collecteur de courant est également capable de collecter le courant provenant d'une section de système d'alimentation en courant alternatif, et
les deuxièmes moyens de commutation de circuit sont configurés pour commuter le trajet de courant de sorte que,
dans un cas dans lequel le collecteur de courant collecte le courant alternatif, le courant alternatif circule du collecteur de courant vers le transformateur,

la puissance convertie en le courant continu par le convertisseur soit fournie à l'onduleur configuré pour commander le moteur à courant alternatif, et
la puissance convertie en le courant continu par le convertisseur et abaissée par le hacheur élévateur/abaisseur soit fournie à l'onduleur configuré pour effectuer la commande à fréquence constante et tension constante.

3. Convertisseur de puissance de traction pour un véhicule ferroviaire multisystème selon la revendication 2, comprenant en outre :

des troisièmes moyens de commutation de circuit (S7) capables de commuter le trajet de courant de manière sélective ; et
une résistance (BR) connectée en série aux troisièmes moyens de commutation de circuit,
dans lequel les troisièmes moyens de commutation de circuit sont configurés pour commuter le trajet de courant de sorte que,
dans un cas dans lequel le collecteur de courant collecte un courant continu, la résistance soit connectée au convertisseur, et une branche constituant le convertisseur effectue une commande abaisseuse.

4. Convertisseur de puissance de traction pour un véhicule ferroviaire multisystème selon la revendication 2,
dans lequel le nombre de branches constituant l'onduleur configuré pour commander le moteur à courant alternatif est identique au nombre de branches constituant le convertisseur.

5. Convertisseur de puissance de traction pour un véhicule ferroviaire multisystème selon la revendication 2, comprenant en outre des quatrièmes moyens de commutation de circuit (S8, S9) entre le collecteur de courant et les premiers moyens de commutation de circuit, les quatrièmes moyens de commutation de circuit étant capables de commuter le trajet de courant de manière sélective,
dans lequel les quatrièmes moyens de commutation de circuit sont configurés pour commuter le trajet de courant de sorte que,
dans un cas dans lequel le collecteur de courant collecte un courant continu, le courant circule à travers le transformateur vers les premiers moyens de commutation de circuit.

6. Convertisseur de puissance de traction pour un véhicule ferroviaire multisystème selon la revendication 2, comprenant en outre un circuit de filtrage (103) connecté entre le convertisseur et le hacheur élévateur/abaisseur, le circuit de filtrage comprenant un condensateur.

7. Convertisseur de puissance de traction pour un véhicule ferroviaire multisystème selon l'une quelconque des revendications 2 à 6, comprenant en outre des cinquièmes moyens de commutation de circuit (S1, S3),
dans lequel le collecteur de courant (P) est également capable de collecter le courant provenant de deux sections de système d'alimentation en courant alternatif différentes, le courant provenant des deux sections de système d'alimentation en courant alternatif étant sous différentes tensions, et
les cinquièmes moyens de commutation de circuit sont capables de commuter un rapport d'enroulement du transformateur d'une manière qui est fonction des tensions des deux courants alternatifs.

8. Convertisseur de puissance de traction pour un véhicule ferroviaire multisystème selon la revendication 7,
dans lequel les deux courants continus sont un courant continu sous 3000 V et un courant continu sous 1500 V, et
les deux courants alternatifs sont un courant alternatif sous 25 kV-50 Hz et un courant alternatif sous 15 kV-16,7 Hz.

FIG. 1

FIG. 2

# FIG. 3

EP 2 695 763 B1

*FIG. 4*

EP 2 695 763 B1

*FIG. 5*

EP 2 695 763 B1

FIG. 6

TO AUXILIARIES

EP 2 695 763 B1

FIG. 7

**EP 2 695 763 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005500797 W
- JP 2011130579 A
- EP 1288060 A